# EUROPÄISCHE PATENTSCHRIFT

(11) **EP 3 610 657 B1**
(45) Veröffentlichungstag und Bekanntmachung des Hinweises auf die Patenterteilung: **24.03.2021**
(21) Anmeldenummer: 18716244.1
(22) Anmeldetag: 05.04.2018
(51) Int. Cl.: H04R 7/02, H04R 1/28, H04R 7/16

(54) **LAUTSPRECHER MIT AUFROLLBARER MEMBRANE**
LOUDSPEAKER WITH ROLLABLE DIAPHRAGM
HAUT-PARLEUR AVEC DIAPHRAGM ENROULABLE

(30) Priorität: 12.04.2017 DE 102017107958
(43) Veröffentlichungstag der Anmeldung: 19.02.2020
(73) Patentinhaber: AIFC-U Unternehmensförderung, 14469 Potsdam (DE)
(72) Erfinder: BÖSNECKER, Robert, 84030 Ergolding (DE)
(74) Vertreter: Hofstetter, Schurack & Partner
(86) Internationale Anmeldenummer: PCT/EP2018/058781
(87) Internationale Veröffentlichungsnummer: WO 2018/189034

(56) Entgegenhaltungen:
- EP-A1- 0 865 713
- WO-A1-2013/127096
- DE-A1-102008 047 796
- JP-A- 2015 109 578
- US-A1- 2004 156 523

## Beschreibung

Die vorliegende Erfindung betrifft eine Lautsprechervorrichtung zur Erzeugung von Schall mit einem elektromechanischen Wandler zum Umwandeln von elektrischen Signalen in mechanische Schwingungen und eine Membrane, die an den elektromechanischen Wandler gekoppelt ist. Diese Lautsprechervorrichtung zielt darauf ab, akustische Ereignisse, beispielsweise Sprache, Musik, Film, Töne und dergleichen wiederzugeben. Zudem ist diese Lautsprechervorrichtung besonders für den mobilen Einsatz konzipiert.

Die Druckschrift DE 10 2008 047 796 A1 beschreibt eine Vorrichtung zur Wiedergabe von Schall. Die Wiedergabe von Schall wird mittels zumindest einer Folie, die teilweise zu transversalartigen Schwingungen anregbar ist, erreicht. Unter dem Begriff Folie wird dabei ein Material verstanden, das biegsam und/oder aufwickelbar und/oder aufrollbar ist und das diese Eigenschaft wenigstens teilweise dauerhaft beibehält. Um bei der Benutzung eine hinreichende Stabilität zu gewährleisten, wird beispielsweise vorgeschlagen, dass die Folie mithilfe einer rahmenartigen Konstruktion gestützt wird. Dadurch verliert die Folie jedoch teilweise ihre Flexibilität.

Aus der Patentschrift US 4 856071 von Marquis ist ein Antrieb für Lautsprecher bekannt, der nicht auf einer runden Antriebsspule, sondern auf einer rechteckigen Antriebsspule beruht. Dieser Antrieb verwendet längliche, rechteckige Magnete und Spulen, während konventionelle Lautsprecher runde Magnetantriebe und Spulen einsetzen. Der Vorteil dieses Patents liegt darin, dass die Antriebsspule nicht mehr rund gewickelt werden muss, sondern auf einer Leiterplatte (Printed Circuit Board) aufgedruckt werden kann. Trotz dieses Vorteils hat sich dieser Typ von Lautsprecher bislang kaum auf dem Markt durchgesetzt. Offenbar reicht dieser Vorteil nicht aus, um sich auf dem Markt zu etablieren.

Ferner offenbart die Druckschrift WO 2013/127096 A1 eine Lautsprechervorrichtung mit einer gefalteten Membran. Vor der Montage ist die Membran flach. Für den Betrieb wird die Membran in einer becherartigen Form fixiert.

Ein Konzept für einen mobilen Lautsprecher ist von der Firma ellula bekannt. Diese Firma bietet einen aufblasbaren Lautsprecher, den sogenannten "Hot Air" Lautsprecher, an. Ein Nachteil dieser Konstruktion ist das aufblasbare Volumen. Es dauert eine gewisse Zeit, bis der Benutzer den Lautsprecher aufgeblasen hat. Auch das Ablassen beziehungsweise Herausdrücken der Luft erfordert einen nicht unerheblichen Kraft- und Zeitaufwand. Augenscheinlich sind die Vorteile dieses Lautsprechersystems nicht überzeugend, da sich dieses Lautsprechersystem bislang ebenfalls nicht auf dem Markt durchsetzen konnte.

Aufgrund der heutigen Smartphone-Technik ist es heutzutage leicht möglich, Musik außerhalb von Wohngebäuden, beispielsweise in Parkanlagen oder Wäldern, zu hören. Es ist lediglich nötig, die Musik als Datei auf dem Smartphone gespeichert zu haben, beziehungsweise Musik über eine mobile Datenverbindung aus dem Internet zu beziehen. Da Smartphones transportabel gebaut werden, steht wenig Bauraum für einen Lautsprecher zur Verfügung. Infolgedessen ergibt sich für die meisten Benutzer subjektiv keine gut klingende Musik. Aus diesem Grund werden verschiedene mobile Lautsprecher angeboten, welche eine gute Musikwiedergabe ermöglichen sollen. Wichtige Anforderungen bezüglich dieser mobilen Lautsprecher sind beispielsweise ein geringes Gewicht und ein geringes Volumen aufgrund der erwünschten Transportierbarkeit, eine möglichst lange unabhängige Stromversorgung und natürlich zugleich eine gute Tonqualität bei der Musikwiedergabe.

Die Aufgabe der vorliegenden Erfindung besteht darin, einen mobilen Lautsprecher mit verbesserter Tonqualität bereitzustellen, der zugleich leicht und bequem zu transportieren ist.

Diese Aufgabe wird durch die vorliegende Erfindung gemäß Anspruch 1 oder Anspruch 11 gelöst. Vorteilhafte Weiterbildungen dieser Erfindung ergeben sich aus den Unteransprüchen.

Die vorliegende Erfindung sieht eine Lautsprechervorrichtung zur Erzeugung von Schall mit einem elektromechanischen Wandler zum Umwandeln von elektrischen Signalen in mechanische Schwingungen und einer Membrane, die an den elektromechanischen Wandler gekoppelt ist, vor. Der elektromechanische Wandler kann beispielsweise eine Vibrationsvorrichtung umfassen, welche derart ausgeführt ist, dass steuerbar Vibrationen durch elektrische Signale ausgelöst werden können. Denkbar wäre in diesem Zusammenhang auch der Einsatz von piezomechanischen Elementen, welche elektrische Signale in mechanische Bewegungen beziehungsweise Schwingungen umsetzen.

Da die Membrane an den elektromechanischen Wandler gekoppelt ist, wird diese angeregt und gibt auf diese Weise hörbaren Schall von sich. Die Erfindung zeichnet sich dadurch aus, dass die Membrane bistabil ausgeführt ist, um entweder einen stabilen Betriebszustand oder einen stabilen Transportzustand einzunehmen. Andere als die beiden Zustände der Membrane sind instabil. Eine räumliche Ausdehnung der bistabilen Membrane ist in einer Dimension im Transportzustand kleiner als im Betriebszustand. Da die Membrane in einen Transportzustand, der kleiner als der Betriebszustand ist, versetzt werden kann, ist es beispielsweise leichter möglich, die Lautsprechervorrichtung bei einem Ausflug, beispielsweise in einen Park, zu transportieren. Die Membrane kann also zwei stabile Zustände einnehmen. Ein Zustand wird zur mobilen Schallwiedergabe verwendet, der sogenannte Betriebszustand, der andere Zustand ist für eine leichte Transportierbarkeit ausgelegt, der sogenannte Transportzustand.

Eine Weiterbildung der vorliegenden Erfindung sieht eine Lautsprechervorrichtung vor, wobei die bistabile Membrane im Transportzustand aufgerollt ist. Im aufgerollten Zustand ist die Membrane wesentlich kompakter und benötigt ein deutlich geringeres Volumen und somit weniger Platzbedarf. Dies kommt dem Wunsch einer guten Transportierbarkeit sehr entgegen.

In einer speziellen Ausführungsform der vorliegenden Erfindung umgreift die bistabile Membrane im Transportzustand ein zylindrisches Gehäuse der Lautsprechervorrichtung teilweise oder ganz. Die Lautsprechervorrichtung umfasst in diesem Fall die Membrane sowie das zylindrische Gehäuse. Da die Membrane um das zylindrische Gehäuse aufgerollt werden kann, bildet sie mit diesem zylindrischen Gehäuse eine Einheit. Damit sind alle Komponenten der Lautsprechervorrichtung kompakt zusammengefasst, können sehr leicht transportiert werden und das Risiko die bistabile Membrane zu verlieren, wird so reduziert.

In einem weiteren Beispiel der vorliegenden Erfindung ist die bistabile Membrane aus Federstahl gefertigt. Federstahl ist ein Stahl, der im Vergleich zu anderen Stählen eine höhere Festigkeit besitzt. Elastizität als herausragende Eigenschaft des Federstahls wird durch Herstellen einer Legierung mit den entsprechenden Eigenschaften erzielt. Das heißt, es gibt verschiedene Varianten für Federstahl, welche auf unterschiedlichen Legierungen beruhen. Auch die Formgebung der Membrane ist von Bedeutung. Meist erhält die bistabile Membrane durch Walzen einen bogenförmigen Querschnitt. Damit kann die Kraft bzw. der Kraftaufwand beeinflusst werden, mit welcher die Membrane von dem stabilen Betriebszustand in den stabilen Transportzustand überführt werden kann. Die bistabile Membrane muss jedoch nicht zwingend gewölbt sein. Es ist auch möglich, dass die bistabile Membrane in nicht gewölbten Formen, beispielsweise in quaderähnlichen Strukturen oder plan, ausgeführt ist.

Speziell kann die bistabile Membrane derart ausgebildet sein, dass sie sich aus dem stabilen Betriebszustand durch Knicken selbstständig in den stabilen Transportzustand aufrollt. Durch das Knicken wird beispielsweise der bogenförmige Querschnitt der Membrane in dem stabilen Betriebszustand in einen geradlinigen Querschnitt an der Knickstelle übergeführt. Dadurch wird diejenige Potentialenergie aufgebracht, die notwendig ist, den Potentialberg zu überwinden, der zwischen dem stabilen Betriebszustand und dem stabilen Transportzustand liegt. Da die bistabile Membrane neben dem stabilen Betriebszustand (ohne äußeren Einfluss) nur einen einzigen weiteren stabilen Zustand, nämlich den Transportzustand, aufweist, sind alle dazwischen liegenden Zustände instabil. In Folge dessen rollt sich die Membrane beispielsweise vollständig reproduzierbar in den Transportzustand auf, wenn der bogenförmige Querschnitt der Membrane an einer Stelle ausreichend (vergleiche Potentialberg) gestört wird. Nur durch einen fest vorgegebenen Kraftaufwand kann die Membrane aus dem Transportzustand wieder entrollt werden, so dass sie den in der Regel linearen, stabilen Betriebszustand einnimmt, in dem sie einrastet (vergleiche "Schnappband" unten).

Eine weitere Ausführungsform der vorliegenden Erfindung sieht vor, dass die bistabile Membrane mithilfe eines Dauermagneten am zylindrischen Gehäuse befestigt ist. Der Dauermagnet kann dabei an der Außen- oder Innenseite des zylindrischen Gehäuses angeordnet sein. Damit ist es möglich, die Membrane am zylindrischen Gehäuse einfach zu befestigen und auch einfach wieder loszulösen. Ist der Dauermagnet an der Innenseite des zylindrischen Gehäuses angeordnet, so ist dieser nach außen nicht sichtbar. Dies kann besonders dann wichtig werden, wenn der Dauermagnet aus Gründen des Designs stören würde.

Eine weitere Befestigungsvariante sieht vor, dass die bistabile Membrane durch eine lösbare mechanische Verbindung an den elektromechanischen Wandler gekoppelt ist. Eine solche lösbare mechanische Verbindung kann beispielsweise eine Steckverbindung sein. Auch ein Klettverschluss als lösbare mechanische Verbindung ist denkbar. Es können dabei auch Klemmverbindungen zum Einsatz kommen. Je nach Ausgestaltung der Lautsprechervorrichtung innerhalb des zylindrischen Gehäuses kann es vorteilhaft sein, wenn die Befestigung nicht magnetisch ist. Bei der Variante mit dem Dauermagneten könnte es zu magnetischen Störfeldern kommen, welcher unter Umständen die Elektronik oder den elektromechanischen Wandler der Lautsprechervorrichtung beeinträchtigen könnte. In einem solchen Fall ermöglicht eine lösbare mechanische Verbindung eine Ankopplung der Membrane an den elektromechanischen Wandler, ohne dabei die eventuell sensible Elektronik im Inneren des zylindrischen Gehäuses zu beeinflussen.

Weiterhin ist in einer zusätzlichen Ausgestaltung der vorliegenden Erfindung vorgesehen, dass der elektromechanische Wandler senkrecht zur bistabilen Membrane positioniert ist. Steht der elektromechanische Wandler senkrecht zur Membrane, so ist die Übertragung mechanischer Schwingungen beziehungsweise mechanischer Vibrationen vom elektromechanischen Wandler zur Membrane besonders effektiv. Zudem ermöglicht diese Positionierung eine symmetrische Konstruktion der Lautsprechervorrichtung. Dies kann besonders dann vorteilhaft sein, wenn die Lautsprechervorrichtung visuell besonders ansprechend konzipiert werden soll.

Soll die Membrane neben der Erzeugung von Schall auch zum Betrachten von Bildern verwendet werden, so sieht eine weitere Ausgestaltung der vorliegenden Erfindung vor, dass die Lautsprechervorrichtung einen Projektor aufweist, mit dem Licht auf die bistabile Membrane projizierbar ist. Der Projektor gehört in dieser Variante der Erfindung zu der Lautsprechervorrichtung. Er ist dazu ausgebildet, Licht zu emittieren und die Membrane zu beleuchten. Mit anderen Worten, der Projektor kann Licht auf die Membrane projizieren. Damit kann die Membrane als passive Projektionsfläche, also wie eine Art Kinoleinwand, benutzt werden. Der Projektor kann beispielsweise als Beamer ausgeführt sein, wie er häufig in Vorlesungssälen aufzufinden ist.

Ferner kann dieser Beamer ebenfalls wie die Lautsprechervorrichtung entsprechend klein und mobil ausgeführt sein.

In einer weiteren Ausführungsform der vorliegenden Erfindung ist vorgesehen, dass die Lautsprechervorrichtung ein Display zur Darstellung von Bildern und/oder Videos aufweist (z.B. Folien-Display, e-Paper). In diesem Fall wird kein externer Projektor benötigt. Die Bilder beziehungsweise Videos können in diesem Fall aus einem internen Speicher der Lautsprechervorrichtung geladen werden oder über eine mobile Datenverbindung zum Internet bezogen werden. In diesem Fall weist die Lautsprechervorrichtung ähnlich wie ein Smartphone eine Sendeempfangseinrichtung zu einem mobilen Datennetz auf.

Zur Erzeugung der mechanischen Schwingungen beziehungsweise Vibrationen kann in einer weiteren Ausführungsform der vorliegenden Erfindung vorgesehen sein, dass der elektromechanische Wandler als Piezoaktor ausgeführt ist. Kernstück eines Piezoaktors ist zum Beispiel ein Piezostapel, der geschichtete Piezostapelelemente beinhalten kann. Wird an dem Piezostapel eine Spannung angelegt, so ändert sich wenigstens eine räumliche Dimension des Piezostapels. Damit können elektrische Signale in mechanische Schwingungen transformiert werden. Diese Ausführungsform ist besonders dann vorteilhaft, wenn die mechanischen Schwingungen nicht auf magnetischem Prinzip erzeugt werden sollen. Aus einem elektrischen Signal kann direkt eine mechanische Schwingung erzeugt werden.

Die vorliegende Erfindung stellt auch ein Verfahren zum Betreiben einer Lautsprechervorrichtung zur Erzeugung von Schall bereit. Mithilfe eines elektromechanischen Wandlers werden durch elektrische Signale mechanische Schwingungen erzeugt. Dabei kann der elektromechanische Wandler wie im vorigen Absatz erläutert wird, als Piezoaktor ausgeführt sein. Der elektromechanische Wandler wird mit einer bistabilen Membrane gekoppelt, welche einen stabilen Betriebszustand oder einen stabilen Transportzustand aufweist. Dabei wird die bistabile Membrane zur Kopplung an den elektromechanischen Wandler vom Transportzustand in den Betriebszustand übergeführt, der in einer räumlichen Dimension größer als der Transportzustand ist. Das Überführen vom Transportzustand in den Betriebszustand erfolgt beispielsweise durch Abrollen der bistabilen Membrane. Möchte man nach einem Ausschalten der Lautsprechervorrichtung die bistabile Membrane kompakt verstauen beziehungsweise mit dem Gehäuse verbinden, so kann in einem optionalen Schritt die bistabile Membrane in den Transportzustand aufgerollt werden und von dem elektromechanischen Wandler entkoppelt werden. Damit kann die Lautsprechervorrichtung in einen transportablen Zustand versetzt werden. Es gelten ferner dieselben Vorteile und Variationsmöglichkeiten im Zusammenhang mit der beschriebenen Lautsprechervorrichtung erläutert wurden.

Die vorliegende Erfindung wird nun anhand der beigefügten Zeichnungen näher erläutert, in denen zeigen:
- Fig. 1: eine schematische Seitenansicht eines halben Antriebs (Quadro-Magnet-System) des elektromechanischen Wandlers mit einer Fixiervorrichtung;
- Fig. 2: ein Quadro-Magnet-System auf einer Platine mit aufgedruckter Spule,
- Fig. 3: eine Skizze eines Quadro-Magnet-Systems mit Fixiervorrichtung;
- Fig. 4: eine Skizze des elektromechanischen Wandlers in senkrechter Position;
- Fig. 5: eine Prinzipskizze des elektromechanischen Wandlers in einem zylindrischen Gehäuse in einer Draufsicht inklusive weiterer Elektronikkomponenten;
- Fig. 6: eine Prinzipskizze der Lautsprechervorrichtung mit ablösbarer Membrane;
- Fig. 7: eine Skizze einer beispielhaften Lautsprechervorrichtung mit abgerollter Membrane, welche am elektromechanischen Wandler gekoppelt ist; und
- Fig. 8: eine Skizze einer Lautsprechervorrichtung, wobei die bistabile Membrane um das zylindrische Gehäuse aufgerollt ist.

Die nun im Folgenden genannten Ausführungsbeispiele stellen besonders vorteilhafte Ausgestaltungen der vorliegenden Erfindung dar. Sie beschreiben weitere Vorteile, Merkmale und Einzelheiten der Erfindung, sind jedoch auch in anderen Ausführungsformen oder Merkmalskombinationen denkbar, ohne den Rahmen der Erfindung zu verlassen.

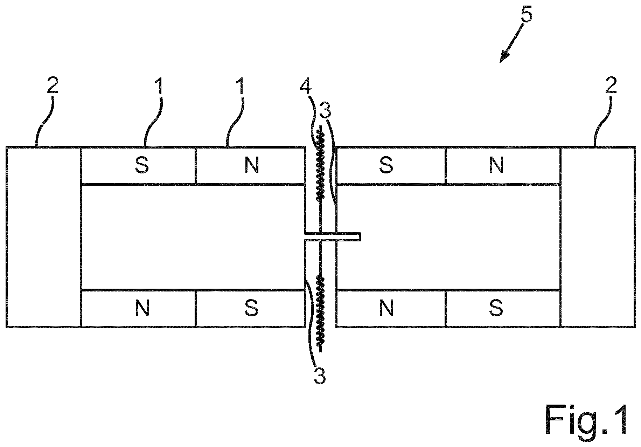

Fig. 1 zeigt skizzenhaft in einer Seitenansicht einen Antrieb eines elektromechanischen Wandlers 7 einer Lautsprechervorrichtung 17. Dieser Antrieb weist vier Dauermagnete 1 auf, daher wird dieser Antrieb auch als Quadro-Magnet-System 5 bezeichnet. Eine Spule 4 mit Windungen ist mittig leicht angedeutet. Ein elektromechanische Wandler 7 weist zwei Quadro-Magnet-Systeme 5, wie in Fig. 1 dargestellt, auf. Das Quadro-Magnet-System 5 beinhaltet vier Dauermagnete 1 im Gegensatz zu Marquis' Ansatz, welcher zwei Magnete pro Antrieb einsetzt. Durch den Einsatz von vier Dauermagneten 1 entfällt der Einsatz von Polschuhen, welche aufgrund des Übergangsverlustes von Eisen zu Magnet als unvorteilhaft angesehen werden.

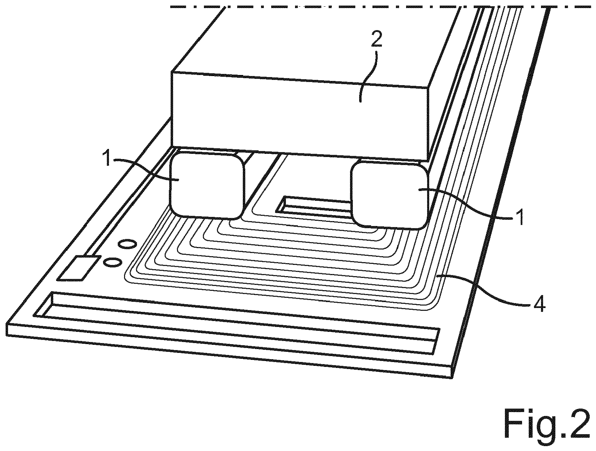

Um mechanische Schwingungen zu erzeugen, wird die Spule 4 durch elektrische Signale in Schwingungen versetzt. Da die Spule 4 in einem Magnetsystem angeordnet ist, welches zwei Quadro-Magnet-Systeme 5 aufweist, induziert eine Änderung der Stromstärke eine mechanische Bewegung der Spule 4 aufgrund des Induktionsprinzips. Man kann die Kombination zweier Quadro-Magnet-Systeme 5 auch als "Sandwich-Magnetsystem" betrachten. Die Spule 4 ist zusammen mit dem Quadro-Magnet-System 5 in einer Skizze in Fig. 2 beispielhaft gezeigt. Die Spule 4 ist in diesem Fall auf einer Platine aufgedruckt. Der Spulenträger kann beispielsweise Pertinax oder Epoxidharz getränktes Papier sein. Die Spule 4 wird in diesem Beispiel aus roten Kupferbahnen gebildet, welche die Wicklungen darstellen. Aussparungen im Platinenmaterial sorgen für eine Gewichtsreduktion. Sie sind beispielsweise entlang der Mittelachse der Platine angeordnet. In Fig. 2 ist jedoch nur eine Aussparung sichtbar.

Als Trägerelement für das Quadro-Magnet-System 5 ist in Fig. 2 Reineisen 2 vorgesehen. Das Trägerelement könnte auch Kunststoff aufweisen, jedoch bietet Reineisen 2 den Vorteil, den magnetischen Fluss zu verstärken und somit die Wirkung des Magnetsystems zu verbessern. Um den magnetischen Fluss zusätzlich zu verstärken kann vorgesehen sein, dass in einer "High End-Variante" das Reineisen 2 an den Flächen, mit denen es die Dauermagnete 1 berührt, zusätzlich geläppt oder poliert sind. Bei der Verwendung von Reineisen 2 als Trägerelement des Quadro-Magnet-Systems 5 müssen die Dauermagnete 1 nicht an das Trägerelement geklebt werden, weil die Kraft der Dauermagnete 1 so groß ist, dass sie von alleine am Reineisen 2 haften. Je nach Ausgestaltung der Lautsprechervorrichtung 17 können unterschiedliche Dauermagnete 1 eingesetzt werden. Üblich ist der Einsatz von N42 bis N50 Magneten, weil deren magnetische Kraft groß genug ist, sodass sie ohne Weiteres am Reineisen 2 haften bleiben.

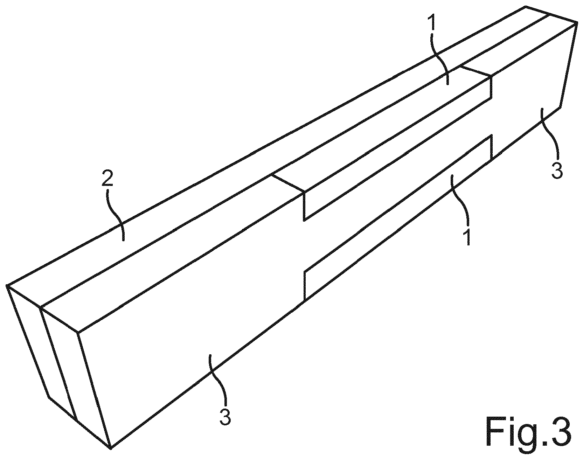

Jedoch ziehen sich die in Fig. 2 gezeigten Dauermagnete 1 gegenseitig an, sodass sie sich in kürzester Zeit einander annähern und in Kontakt treten würden. Mit anderen Worten, das in Fig. 2 gezeigte System ist bei Vibrationen nicht stabil. Die Dauermagnete 1 würden bei Vibrationen nicht an ihren Plätzen bleiben, sondern sich zügig zusammenfinden und in Kontakt treten. Daher ist es erforderlich, eine Fixierung bereitzustellen, welche verhindert, dass die Dauermagnete 1 auch bei Vibrationen ihrer Position nicht verlassen. Die Fig. 3 zeigt beispielhaft das Quadro-Magnet-System 5 mit einer Fixiervorrichtung 3. Die Fixiervorrichtung 3 liegt auf dem Reineisen 2 auf und stellt Aussparungen für die Dauermagnete 1 bereit. In diesen Aussparungen finden die Dauermagnete 1 Platz und werden so fixiert. Ferner kann die Fixiervorrichtung 3 dazu ausgebildet sein, die Spule 4 innerhalb des Sandwich-Magnetsystems zu halten und den Abstand beider Quadro-Magnet-Systeme 5 zu definieren und zu gewährleisten.

Die Fixiervorrichtung 3 dient als Abstandselement und kann aus Aluminium oder Kunststoff gefertigt sein. Auch andere metallische oder keramische Materialien sind als Abstandselement möglich. Die Fixiervorrichtung 3 vermag, den oberen und unteren Dauermagneten 1 auf korrektem Abstand zu halten und kann zusätzliche Bohrungen und Gewinde aufweisen, die es ermöglichen, das Sandwich-Magnetsystem beispielsweise in einem Rahmen oder ähnlichem zu befestigen. Auch eine Befestigungsvorrichtung, um die Spule innerhalb der Quadro-Magnet-Systeme 5 zu fixieren, kann an der Fixiervorrichtung 3 angeordnet sein. Mit der Fixiervorrichtung 3 kann also die Breite des Spaltes der beiden Quadro-Magnet-Systeme 5 zueinander eingestellt werden. Erstreckt sich das Reineisen 2 über beide Dauermagnete 1, wie in Fig. 2 und Fig. 3 gezeigt ist, so kann dadurch eine geringere Aufbauhöhe der Lautsprechervorrichtung 17 erreicht werden. Dies kann für extrem flache Lautsprecher von Bedeutung sein. Jedoch vergrößert sich in diesem Fall die Breite der Lautsprechervorrichtung 17. Die Fixiervorrichtung 3 kann beispielsweise durch Fräsung gewonnen werden.

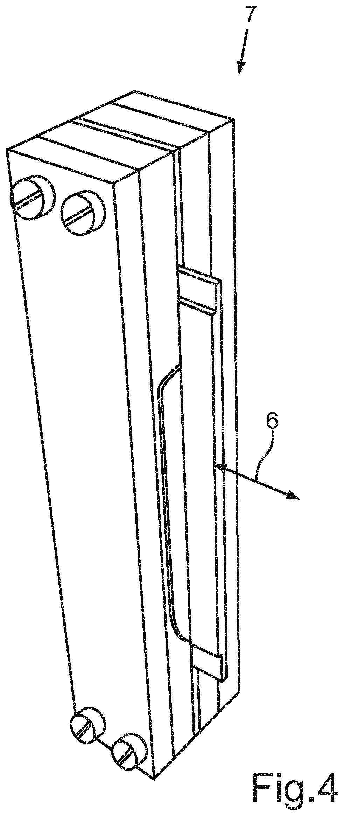

Werden zwei Quadro-Magnet-Systeme 5, wie in der Skizze in Fig. 3 gezeigt wird, zusammen montiert, so ergibt sich der elektromechanische Wandler 7. Dieser elektromechanische Wandler 7 ist in senkrechter Position in Fig. 4 als Skizze eines Prototyps zu sehen. Die beiden Quadro-Magnet-Systeme 5 können beispielsweise durch M3 Gewindeschrauben miteinander fixiert werden, wie in Fig. 4 gezeigt ist. Zusätzlich können Beilagscheiben oder Unterlegscheiben verwendet werden, um den Luftspalt zwischen den beiden Quadro-Magnet-Systemen 5 zu justieren. Diese Gewindeschrauben können weiterhin dazu verwendet werden, den elektromechanischen Wandler 7 später an einem zylindrischen Gehäuse 8 der Lautsprechervorrichtung 17 zu befestigen. Die Platine mit der aufgedruckten Spule wird in dem Spalt zwischen den beiden Quadro-Magnet-Systemen 5 so eingesetzt, dass sie sich innerhalb des Magnetfelds hin und her bewegen kann. Der eingezeichnete Doppelpfeil zeigt Bewegungsrichtungen 6 der Platinenspule an, wenn sie mit einem Wechselstrom durchflossen wird. Die Amplitude der Bewegungsrichtungen 6 beträgt in diesem Ausführungsbeispiel etwa 4 bis 5 Millimeter. Diese mechanischen Schwingungen beziehungsweise Vibrationen werden im weiteren Verlauf auf eine bistabile Membrane 18 übertragen.

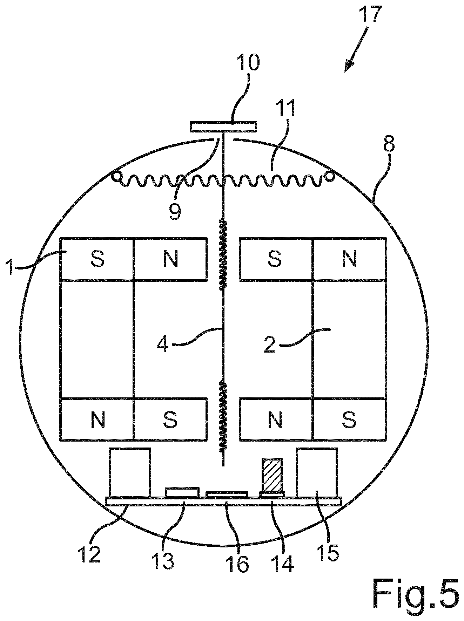

Der elektromechanische Wandler 7 kann innerhalb des zylindrischen Gehäuses 8 der Lautsprechervorrichtung 17 angeordnet sein, wie es die Fig. 5 beispielhaft zeigt. Fig. 5 zeigt eine schematische Draufsicht auf die Lautsprechervorrichtung 17, wobei der Innenraum der Lautsprechervorrichtung 17 beispielhaft skizziert ist. Die Platinenspule ist dabei so konzipiert, dass sie aus dem Quadro-Magnet-System 5 herausragt und durch eine Öffnung 9 am Gehäuse 8 die äußere Seite des Gehäuses 8 erreicht. Dort befindet sich ein Befestigungselement 10 für die bistabile Membrane 18. In diesem Ausführungsbeispiel ist das Befestigungselement 10 ein Dauermagnet 1.

Damit die Spule 4 im Luftspalt der beiden Quadro-Magnet-Systeme 5 nicht wackelt oder gar aus dem Luftspalt herausfällt, kann eine weitere Befestigungseinrichtung angebracht werden, sodass die Spule 4 ihre Bewegungen wenigstens teilweise ungehindert durchführen kann. Diese Befestigungseinrichtung kann beispielsweise eine Zentrierspinne 11 darstellen. Im Beispiel der Fig. 5 sind weitere Elektronikkomponenten innerhalb der Lautsprechervorrichtung 17 begrenzt durch das Gehäuse 8 angeordnet. So findet sich in diesem Beispiel eine Verstärkerplatine 12 mit einem integrierten Verstärkermodul 13, einer Funkantenne 14, einem Energiezwischenspeicher 15 sowie einer Funk- und/oder Ladeeinrichtung 16. Die Funkeinrichtung 16 kann beispielsweise dazu verwendet werden, um einen mobilen Bluetoothlautsprecher zu realisieren.

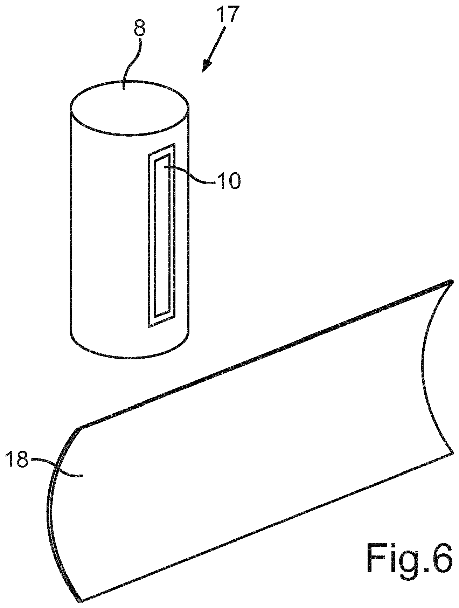

Fig. 6 zeigt schematisch die Lautsprechervorrichtung 17 inklusive der abgerollten bistabilen Membrane 18 im gestreckten Zustand. Diese bistabile Membrane 18 kann beispielsweise aus Federstahl gefertigt sein und ist mit relativ geringem Kraftaufwand zum Beispiel durch ein Knicken, bei dem die konvexen bzw. nach außen gewölbten Abschnitte aufeinander zu bewegt werden, von einem stabilen Zustand in den zweiten stabilen Zustand überführbar. Fig. 6 zeigt die bistabile Membrane 18 in ihrem Betriebszustand. Soll die Lautsprechervorrichtung 17 zur beispielhaften Musikwiedergabe aktiviert werden, kann die bistabile Membrane 18 über das Befestigungselement 10 an der Lautsprechervorrichtung 17 angekoppelt werden. Damit können die vom elektromechanischen Wandler 7 erzeugten mechanischen Schwingungen auf die bistabile Membrane 18 übertragen werden. Dadurch wird die bistabile Membrane 18 angeregt und versetzt die umgebende Luft in Schwingungen, was von Menschen mit entsprechend gesundem Gehör als Musik aufgefasst werden kann.

Diese Konstruktion ermöglicht es außerdem, eine Musikwiedergabe rasch zu beenden. In diesem Fall wird die bistabile Membrane 18 einfach von der Lautsprechervorrichtung 17 entfernt. Damit können keine mechanischen Schwingungen mehr auf die Membrane 18 übertragen werden, womit die umgebende Luft nicht mehr durch die bistabile Membrane 18 angeregt werden kann. Damit verstummt die Musik.

Des Weiteren kann vorgesehen sein, dass die bistabile Membrane 18 als Projektionsfläche oder als Display ausgeführt ist. Ist die bistabile Membrane 18 als Projektionsfläche ausgeführt, so ermöglicht ein externer Projektor die Projektion von Licht auf der bistabilen Membrane 18 im Betriebszustand. So ist es beispielsweise möglich, mittels eines mobilen tragbaren Beamers, Bilder beziehungsweise Animationen auf der bistabilen Membrane 18 anzuzeigen. Dies kann beispielsweise bei einer Party Anwendung finden, bei der über einen Beamer YouTube Videos präsentiert werden.

Des Weiteren ist es auch möglich, dass die bistabile Membrane 18 selbst ein Display darstellt. So kann die bistabile Membrane 18 beispielsweise als oder mit einer OLED-Folie oder einem elektronischen Papier ausgeführt sein. Diese Technologien ermöglichen es, die bistabile Membrane 18 hinreichend dünn als Display auszuführen. Zudem ist es möglich, über die Funkantenne 14, Bilder beziehungsweise Videos aus einem mobilen Datennetz beziehungsweise örtlichem WLAN-Netz zu empfangen, um diese auf der bistabilen Membrane 18 anzuzeigen.

In diesem Fall würde die bistabile Membrane 18 zusammen mit der Lautsprechervorrichtung 17 als eine Art mobiler Fernseher fungieren. Bei diesem Ausführungsbeispiel ist kein zusätzlicher externer Projektor nötig. Neben dem Empfangen der Bilder beziehungsweise Videos aus einer WLAN-Verbindung beziehungsweise einem mobilen Datennetz kann es auch vorgesehen sein, dass Bilder beziehungsweise Videos bereits in einem internen Speicher der Lautsprechervorrichtung 17 gespeichert sind. Damit können Bilder beziehungsweise Videos auch ohne eine Datenverbindung zu einem mobilen Datennetzwerk beziehungsweise WLAN-Netzwerk angezeigt oder abgespielt werden.

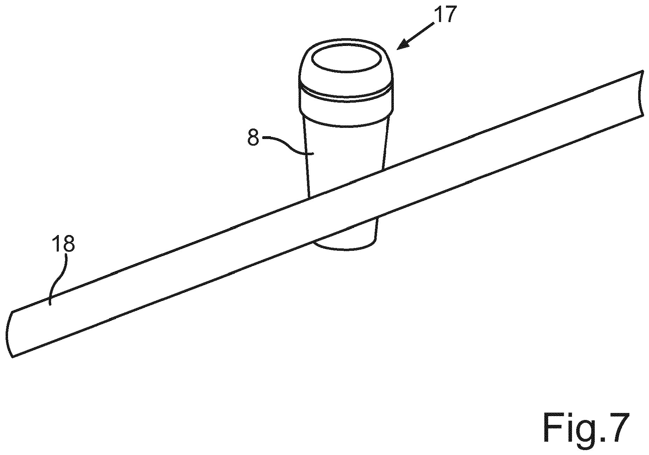

Fig. 7 zeigt beispielhaft eine Skizze der Lautsprechervorrichtung 17 als Prototyp mit der gekoppelten bistabilen Membrane 18 abgerollt im Betriebszustand. Die bistabile Membrane 18 ist in diesem Beispiel magnetisch an das Gehäuse 8 der Lautsprechervorrichtung 17 gekoppelt. Bei diesem Prototyp ist die bistabile Membrane 18 als ein Schnappband ausgeführt, wie es bei Radfahrern eingesetzt wird. Radfahrer verwenden Schnappbänder, um zu verhindern, dass ihre Hose mit einer Fahrradkette in Kontakt kommt.

Bei der vorliegenden Erfindung jedoch dient die bistabile Membrane 18 als ein Modul zur Wiedergabe von Schall. Die aufrollbare bistabile Membrane 18 lässt sich in verschiedenen Größen herstellen. Die in Fig. 7 gezeigte bistabile Membrane 18 weist eine Breite von etwa 2 Zentimeter auf und kann daher nur eine relativ geringe Lautstärke bereitstellen. Soweit dem Erfinder bekannt ist, lässt sich eine bistabile Membrane 18 mit einer Breite von bis zu 25 Zentimeter und einer Länge von bis zu 50 Zentimeter, gegebenenfalls auch größer, herstellen. Dies ermöglicht es, deutlich lauteren Schall zu produzieren als mit einer Membrane, die lediglich eine Breite von 2 Zentimeter aufweist. Die bistabile Membrane 18 kann wegen der magnetischen Koppelung leicht vom Gehäuse 8 entfernt werden.

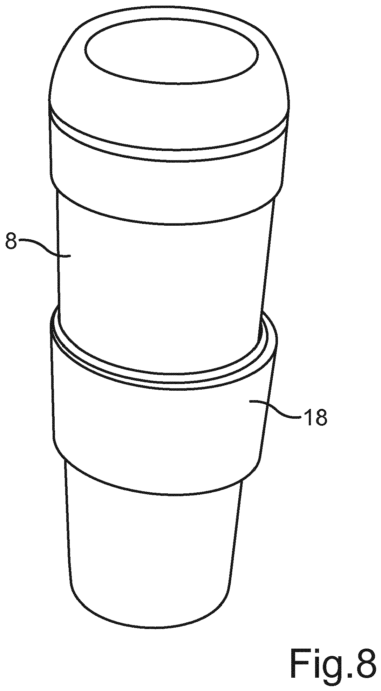

Darüber hinaus kann durch einen leichten Druck auf beiden Enden der bistabilen Membrane 18 diese zum Aufrollen gebracht werden. Dadurch wird die bistabile Membrane 18 vom Betriebszustand, wie in Fig. 7 gezeigt, in den stabilen Transportzustand versetzt, wie in Fig. 8 gezeigt ist. Wird die bistabile Membrane 18 durch leichten Druck auf beide Enden zum Aufrollen gebracht, rollt sich die bistabile Membrane 18 relativ rasch durch die Federstahleigenschaft auf. Diese Eigenschaft findet sich auch im Namen "Schnappband" wieder.

Wird die bistabile Membrane 18 zum Aufrollen gebracht, so ist es möglich, dass diese um das zylindrische Gehäuse 8 der Lautsprechervorrichtung 17 herumgeführt wird. Es entsteht dabei eine Wicklung der bistabilen Membrane 18 um das zylindrische Gehäuse 8. Fig. 8 zeigt eine Skizze der Lautsprechervorrichtung 17 mit der bistabilen Membrane 18 im Transportzustand.

Es besteht auch die Möglichkeit, die bistabile Membrane 18 an dem Gehäuse 8 bzw. dem Befestigungselement 10 unlösbar zu befestigen, sodass eine räumliche Trennung von bistabiler Membrane 18 und Lautsprechervorrichtung 17 nicht mehr möglich ist. Hierbei werden die Spule 4 und die Membrane 18 stoffschlüssig miteinander verbunden. Um in den Betriebszustand zu gelangen, muss die bistabile Membrane 18 gestreckt werden. Zum Transportieren wird sie in den Transportzustand versetzt, indem die bistabile Membrane durch Druck auf beiden Enden aufgerollt wird. Ein Vorteil dieser stoffschlüssigen Verbindung ist, dass man die bistabile Membrane 18 nicht verlieren kann. Nachteilig ist jedoch, dass die bistabile Membrane 18 nicht austauschbar ist.

Durch die bistabile Membrane 18 kann die Lautsprechervorrichtung 17 sinnvoll erweitert werden. Damit kann Musik in besserer Klangqualität wiedergegeben werden. Da die Membrane 18 bistabil ausgeführt ist, ist es zudem möglich, die bistabile Membrane 18 in einen praktischen Transportzustand zu versetzen. Das Ergebnis ist eine Lautsprechervorrichtung 17, welche eine gute Klangqualität bietet und zugleich leicht zu transportieren ist, also sehr mobil ist.

Die Druckschrift DE 10 2008 047 796 A1 offenbart die Verwendung einer Folie als Membrane für einen Flächenlautsprecher. Diese frühere Druckschrift jedoch beinhaltet mehrere Schwächen, welche durch die vorliegende Erfindung überwunden werden. Die Folien in der früheren Offenlegung sind entweder sehr steif und dann nicht aufwickelbar oder sie sind aufwickelbar, aber dann nicht steif genug, um als Membrane dienen zu können. Diese Druckschrift beschreibt einen Rahmen zur Stabilisierung der Folie. Im Einsatz als mobiler Lautsprecher ist jedoch ein starrer Rahmen eher ungeeignet.

Die vorliegende Erfindung bietet eine bistabile Membrane 18, welche zum einen stabil genug, auf der anderen Seite jedoch auch flexibel genug ist, um einen Betriebszustand und einen Transportzustand bereitzustellen. Zudem wird in der früheren Druckschrift DE 10 2008 047 796 A1 ein Schwingungserreger an der Folie befestigt, um den Lautsprecher zu realisieren. Dadurch ist die Folie aber nicht mehr vollständig aufwickelbar, weil der Schwingungsgeber wie beschrieben auch nicht biegsam ausgeführt sein kann. Diese aufgeführten Nachteile der früheren Druckschrift können durch die Merkmale der vorliegenden Erfindung überwunden werden und führen zu einem sehr praktisch anwendbaren mobilen Lautsprecher.

Insgesamt zeigen die Beispiele, wie durch die Erfindung der Spagat zwischen guter Klangqualität und guter Transportfähigkeit bei mobilen Lautsprechern gelöst wird. Durch die bistabile Membrane 18 kann eine relativ große Fläche als Lautsprecher bereitgestellt werden, welche sich nach Gebrauch jedoch leicht in einen Transportzustand versetzen lässt. Zudem kann die bistabile Membrane 18 im Transportzustand mit der Lautsprechervorrichtung 17 eine praktische Einheit bilden.

## Patentansprüche

1. Lautsprechervorrichtung (17) zur Erzeugung von Schall mit
- einem elektromechanischen Wandler (7) zum Umwandeln von elektrischen Signalen in mechanische Schwingungen,
- einer Membrane (18), die an den elektromechanischen Wandler (7) gekoppelt ist,
**dadurch gekennzeichnet, dass**
- die Membrane (18) bistabil ausgeführt ist, um entweder
- einen stabilen Betriebszustand oder einen stabilen Transportzustand einzunehmen, und
- eine räumliche Ausdehnung der bistabilen Membrane (18) in einer Dimension im Transportzustand kleiner als im Betriebszustand ist.

2. Lautsprechervorrichtung (17) nach Anspruch 1, wobei die bistabile Membrane (18) im Transportzustand aufgerollt ist.

3. Lautsprechervorrichtung (17) nach einem der vorigen Ansprüche, wobei die bistabile Membrane (18) im Transportzustand ein zylindrisches Gehäuse (8) der Lautsprechervorrichtung (17) teilweise oder ganz umgreift.

4. Lautsprechervorrichtung (17) nach einem der vorigen Ansprüche, wobei die bistabile Membrane (18) aus Federstahl gefertigt ist.

5. Lautsprechervorrichtung (17) nach einem der vorigen Ansprüche, wobei die bistabile Membrane (18) derart ausgebildet ist, dass sie sich aus dem stabilen Betriebszustand durch Knicken selbstständig in den stabilen Transportzustand aufrollt.

6. Lautsprechervorrichtung (17) nach Anspruch 3 oder 4, wobei die bistabile Membrane (18) mit Hilfe eines Dauermagneten (1) am zylindrischen Gehäuse (8) befestigt ist.

7. Lautsprechervorrichtung (17) nach den Ansprüchen 1 bis 4, wobei die bistabile Membrane (18) durch eine lösbare mechanische Verbindung an den elektromechanischen Wandler (7) gekoppelt ist.

8. Lautsprechervorrichtung (17) nach einem der vorigen Ansprüche, wobei der elektromechanische Wandler (7) senkrecht zur bistabilen Membrane (18) positioniert ist.

9. Lautsprechervorrichtung (17) nach einem der vorigen Ansprüche, wobei die Lautsprechervorrichtung (17) einen Projektor aufweist, mit dem Licht auf die bistabile Membrane (18) projizierbar ist.

10. Lautsprechervorrichtung (17) nach einem der Ansprüche 1 bis 7, wobei die bistabile Membrane (18) der Lautsprechervorrichtung (17) ein Display zur Darstellung von Bildern und/oder Videos aufweist.

11. Verfahren zum Betreiben einer Lautsprechervorrichtung (17) zur Erzeugung von Schall mit den folgenden Schritten:
- Erzeugung von mechanischen Schwingungen durch elektrische Signale mit Hilfe eines elektromechanischen Wandlers (7),
- Koppelung des elektromechanischen Wandlers (7) mit einer Membrane (18),
**dadurch gekennzeichnet, dass** die Membrane (18) bistabil ist und einen stabilen Betriebszustand oder einen stabilen Transportzustand aufweist, wobei
- die bistabile Membrane (18) zur Koppelung an den elektromechanischen Wandler (7) von dem Transportzustand in den Betriebszustand übergeführt wird und wobei die bistabile Membrane (18) in dem Betriebszustand in einer räumlichen Dimension größer ist als in dem Transportzustand.

## Claims

1. A loudspeaker apparatus (17) for generating sound comprising
- an electromechanical transducer (7) for converting electrical signals into mechanical oscillations,
- a membrane (18) coupled to the electromechanical transducer (7),
**characterized in that**
- the membrane (18) is bistably configured to
- assume either a stable operating state or a stable transport state, and
- a spatial extension of the bistable membrane (18) is smaller in the transport state than in the operating state in one dimension.

2. The loudspeaker apparatus (17) according to claim 1, wherein the bistable membrane (18) is rolled up in the transport state.

3. The loudspeaker apparatus (17) according to any one of the preceding claims, wherein the bistable membrane (18) partially or completely encompasses a cylindrical housing (8) of the loudspeaker apparatus (17) in the transport state.

4. The loudspeaker apparatus (17) according to any one of the preceding claims, wherein the bistable membrane (18) is manufactured of spring steel.

5. The loudspeaker apparatus (17) according to any one of the preceding claims, wherein the bistable membrane (18) is formed such that it autonomously rolls up from the stable operating state into the stable transport state by kinking.

6. The loudspeaker apparatus (17) according to claim 3 or 4, wherein the bistable membrane (18) is attached to the cylindrical housing (8) with the aid of a permanent magnet (1).

7. The loudspeaker apparatus (17) according to claims 1 to 4, wherein the bistable membrane (18) is coupled to the electromechanical transducer (7) by a detachable mechanical connection.

8. The loudspeaker apparatus (17) according to any one of the preceding claims, wherein the electromechanical transducer (7) is positioned perpendicular to the bistable membrane (18).

9. The loudspeaker apparatus (17) according to any one of the preceding claims, wherein the loudspeaker apparatus (17) comprises a projector, by which light is projectable to the bistable membrane (18).

10. The loudspeaker apparatus (17) according to any one of claims 1 to 7, wherein the bistable membrane (18) of the loudspeaker apparatus (17) comprises a display for presenting images and/or videos.

11. A method for operating a loudspeaker apparatus (17) for generating sound comprising the following steps:
- generating mechanical oscillations by electrical signals with the aid of an electromechanical transducer (7),
- coupling the electromechanical transducer (7) to a membrane (18) **characterized in that** the membrane (18) is bistable and has a stable operating state or stable transport state, wherein
- the bistable membrane (18) is transferred from the transport state into the operating state for coupling to the electromechanical transducer (7) and wherein the bistable membrane (18) is larger in the operating state than in the transport state in one spatial dimension.

## Revendications

1. Dispositif formant haut-parleur (17) destiné à générer un son et comprenant
- un convertisseur électromécanique (7) destiné à convertir des signaux électriques en vibrations mécaniques,
- une membrane (18) qui est accouplée au convertisseur électromécanique (7),
**caractérisé en ce que**
- la membrane (18) est conçue de manière à être bistable afin de prendre
- un état de fonctionnement stable ou un état de transport stable, et
- une expansion spatiale de la membrane bistable (18) dans une dimension est inférieure à l'état de transport qu'à l'état de fonctionnement.

2. Dispositif formant haut-parleur (17) selon la revendication 1, la membrane bistable (18) étant enroulée à l'état de transport.

3. Dispositif formant haut-parleur (17) selon l'une des revendications précédentes, la membrane bistable (18) entourant partiellement ou complètement un boîtier cylindrique (8) du dispositif formant haut-parleur (17) à l'état de transport.

4. Dispositif formant haut-parleur (17) selon l'une des revendications précédentes, la membrane bistable (18) étant en acier à ressort.

5. Dispositif formant haut-parleur (17) selon l'une des revendications précédentes, la membrane bistable (18) étant conçue de manière à s'enrouler automatiquement par flambage de l'état de fonctionnement stable dans l'état de transport stable.

6. Dispositif formant haut-parleur (17) selon la revendication 3 ou 4, la membrane bistable (18) étant fixée au boîtier cylindrique (8) à l'aide d'un aimant permanent (1).

7. Dispositif formant haut-parleur (17) selon les revendications 1 à 4, la membrane bistable (18) étant accouplée au transducteur électromécanique (7) par une liaison mécanique libérable.

8. Dispositif formant haut-parleur (17) selon l'une des revendications précédentes, le transducteur électromécanique (7) étant positionné perpendiculairement à la membrane bistable (18).

9. Dispositif formant haut-parleur (17) selon l'une des revendications précédentes, le dispositif formant haut-parleur (17) comportant un projecteur au moyen duquel la lumière peut être projetée sur la membrane bistable (18).

10. Dispositif formant haut-parleur (17) selon l'une des revendications 1 à 7, la membrane bistable (18) du dispositif formant haut-parleur (17) comportant un moyen d'affichage destiné à afficher des images et/ou des vidéos.

11. Procédé de fonctionnement d'un dispositif formant haut-parleur (17) pour générer un son, le procédé comprenant les étapes suivantes :
- générer des vibrations mécaniques par signaux électriques à l'aide d'un convertisseur électromécanique (7),
- accoupler le transducteur électromécanique (7) à une membrane (18),
**caractérisé en ce que** la membrane (18) est bistable et présente un état de fonctionnement stable ou un état de transport stable,
- la membrane bistable (18) étant transférée de l'état de transport à l'état de fonctionnement afin d'être accouplée au transducteur électromécanique (7) et la membrane bistable (18) étant plus grande dans une dimension spatiale à l'état de fonctionnement qu'à l'état de transport.
